# EUROPÄISCHE PATENTSCHRIFT

(11) **EP 1 602 546 B1**
(45) Veröffentlichungstag und Bekanntmachung des Hinweises auf die Patenterteilung: **07.03.2007**
(21) Anmeldenummer: 04013329.0
(22) Anmeldetag: 05.06.2004
(51) Int. Cl.: B61D 17/22, B60D 5/00

(54) **Falten- oder Wellenbalg mit einem zwischen zwei Falten oder Wellen angeordneten Halterungselement**
Folded or concertina wall, with an attachment element between two folds or waves
Soufflet d'intercirculation ou soufflet d'ondulation, avec un dispositif de fixation entre deux ondulations

(43) Veröffentlichungstag der Anmeldung: 07.12.2005
(73) Patentinhaber: HÜBNER GmbH, 34123 Kassel (DE)
(72) Erfinder: Martynenko, Jürgen, 34246 Vellmar (DE)
(74) Vertreter: WALTHER, WALTHER & HINZ Patentanwälte - European Patent Attorneys

(56) Entgegenhaltungen:
- DE-A- 1 400 854
- DE-A- 10 208 557
- DE-U- 29 921 498

## Beschreibung

Die vorliegende Erfindung betrifft einen Falten- oder Wellenbalg als Teil eines Übergangs mit einem zwischen zwei Falten oder Wellen angeordneten Halterungselement zur Verbindung von parallel zum Balg verlaufender Einrichtungselemente, z. B. einer Bodenabdeckung, eines weiteren Balges, einer Balgseitenwand oder Ähnlichem, wobei zwei benachbarte Falten oder Wellen im Übergang durch einen U-förmigen Einfassrahmen miteinander verbunden sind, wobei das Halterungselement durch den Einfassrahmen erfasst ist, und wobei der Einfassrahmen im Bereich des Steges seiner U-form ein Auge bildet. Ein solcher balg ist aus der DE 102 08 557 A bekannt.

Falten- oder Wellenbälge sind insbesondere als Teil eines Übergangs zwischen zwei gelenkig miteinander verbundener Fahrzeuge, z. B. eines Gelenkomnibusses oder eines Schienenfahrzeuges bekannt. Bekannt ist hierbei, dass beispielsweise im Inneren des Balges der Bereich des Übergangs vom Boden zur Balgseitenwand abzudecken ist. Hierzu ist eine sogenannte Bodenabdeckung vorgesehen. Eine solche Bodenabdeckung zeichnet sich durch einen balgähnlichen Aufbau aus, wobei diese Bodenabdeckung jedoch etwa 40 bis 50 cm über dem Boden an dem eigentlichen Balg befestigt ist. Die Befestigung erfolgt hierbei durch ein Halterungselement in Form eines Bleches, wobei dieses Halterungselement im Einzelnen durch den Einfassrahmen erfasst wird, der die beiden Enden zweier benachbarter Falten oder Wellen miteinander verbindet. Im Einzelnen ist hierbei vorgesehen, dass das Halterungselement in Form eines Bleches zwischen dem Balgmaterial liegend durch den Einfassrahmen erfasst wird. Der Einfassrahmen selbst erfasst das Balgmaterial klemmend. Allein die klemmende Erfassung des Balgmaterials der beiden benachbarten Balgelemente, also z. B. zweier Wellen oder zweier Falten und des dazwischenliegenden Halterungselementes reicht allerdings nicht aus, um das Halterungselement tatsächlich sicher zu halten. Das heißt, dass dann, wenn das Halterungselement tatsächlich belastet wird die Gefahr besteht, dass das Halterungselement sich aus dem Einfassrahmen herauszieht. Um ein solches zu verhindern ist bereits bekannt, das Halterungselement mit dem Einfassrahmen mittels Nieten formschlüssig zu verbinden. Im Einzelnen ist hierbei bekannt, dass die Nieten durch die Schenkel des Einfassrahmens geführt werden. Es hat sich jedoch herausgestellt, dass auf Grund der Kapillarwirkung Nässe durch die Öffnungen für den Niet im Einfassrahmen in das Innere des Fahrzeuges dringen kann, was zu vermeiden ist. Es entstehen dann im Inneren des Fahrzeuges nicht nur unschöne Laufnasen, sondern - was viel wesentlicher ist - durch den Wassereintritt wird eine Zerstörung des Balgmaterials in Gang gesetzt, da die Bohrungen für den Durchlass der Nieten das Gewebe freigeben.
Der Erfindung liegt daher die Aufgabe zu Grunde, einen Falten- oder Wellenbalg der eingangs genannten Art derart weiterzubilden, dass das Halterungselement sicher zwischen zwei Falten oder Wellen eines Falten- oder Wellenbalges durch den Falten- oder Wellenbalg aufgenommen werden kann, ohne dass die Gefahr besteht, dass durch Wassereintritt eine Zerstörung des Balges in Gang gesetzt wird, bzw. dass überhaupt Wasser in das Innere des Fahrzeuges gelangen kann.

Die Aufgabe wird erfindungsgemäß dadurch gelöst, dass das Halterungselement an dem dem Einfassrahmen zugewandten Ende eine Erweiterung aufweist, die in das Auge des Einfassrahmens hineinragt. Das heißt, dass die Erweiterung, die beispielsweise als eine endseitige Abkantung des Halterungselementes getroffen sein kann oder aber auch als Verdickung, von dem Auge erfasst wird. Hieraus wird deutlich, dass hierdurch der Einfassrahmen das Halterungselement formschlüssig aufnimmt. Durch diese konstruktive Ausgestaltung wird auch eine stabile und dauerhafte Verbindung zwischen dem Halterungselement einerseits und dem Einfassrahmen bzw. dem dazwischenliegenden Balgmaterial andererseits erreicht, ohne dass eine Verbindung nach außen hin erfolgt, so dass die Gefahr des Wassereintritts naturgemäß nicht mehr besteht.

Nach einem vorteilhaften Merkmal der Erfindung ist weiterhin vorgesehen, dass das Halterungselement im Bereich des Einfassrahmens paarweise Bohrungen aufweist. Der Abstand der Bohrungen eines Bohrungspaares entspricht hierbei dem Abstand der Beine einer Heftklammer, wobei durch diese Bohrungen mittels der Heftklammer das Balgmaterial mit dem Halterungselement, beispielsweise einem Aluminiumblech, verbunden werden soll. Eine solche Ausgestaltung bringt montagetechnische Vorteile, da das Halterungselement zusammen mit dem Balgmaterial zweier einander benachbarter Wellen oder Falten eines Wellen- oder Faltenbalges in den Einfassrahmen eingeschoben und von diesem schlussendlich klemmbar erfasst wird. Darüber hinaus vermindern derartige Heftklammern allerdings auch die Gefahr, dass das Halterungselement zwischen dem Balgmaterial und/oder das Balgmaterial aus dem Einfassrahmen herausgezogen werden kann.

Anhand der Zeichnungen wird die Erfindung nachstehend beispielhaft näher erläutert.
- Figur 1: zeigt einen Balg mit einer im Inneren des Balges angeordneten Balgbodenabdeckung, die von dem Balg gehalten wird;
- Figur 2: zeigt die Einzelheit X in vergrößerter Darstellung;
- Figur 3: zeigt einen Schnitt gemäß der Linie III - III aus Figur 2.

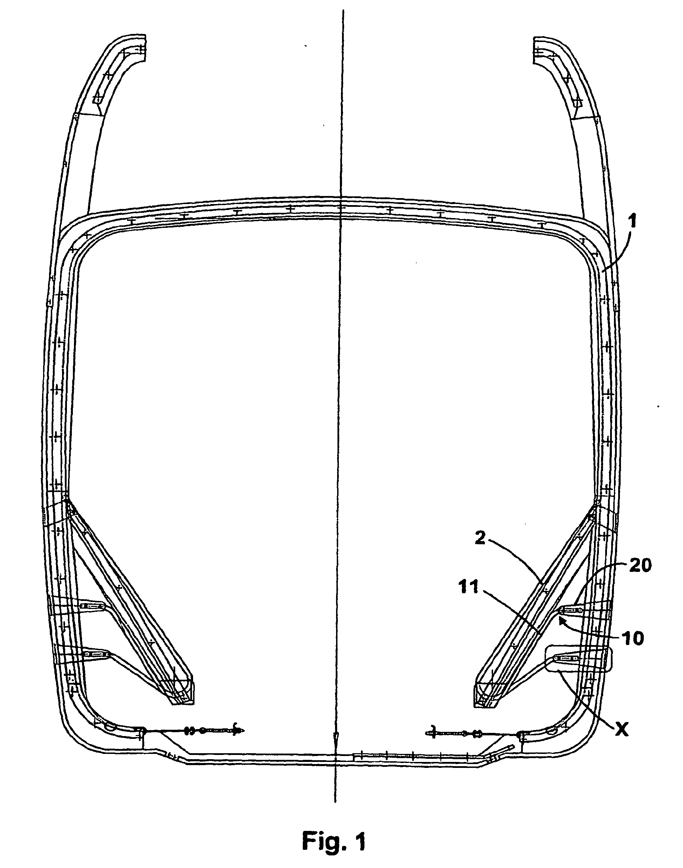

Gemäß Figur 1 ist der dort dargestellte Balg mit 1 bezeichnet; die von dem Balg aufgenommene Bodenabdeckung trägt das Bezugszeichen 2. Zur Fixierung der Balgbodenabdeckung 2 an dem Balg 1 ist eine insgesamt mit 10 bezeichnete Halterungsvorrichtung vorgesehen. Diese Halterungsvorrichtung 10 umfasst einen Arm 11, der von dem Halterungselement 20 aufnehmbar ist.

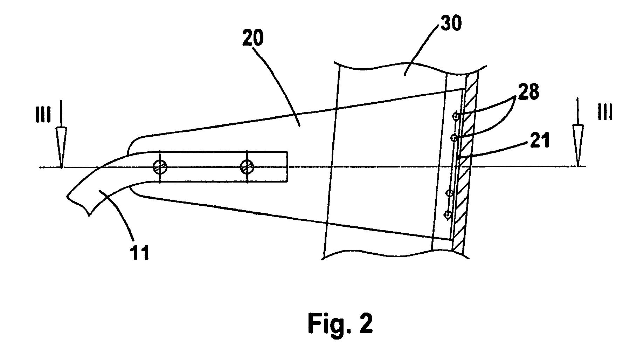

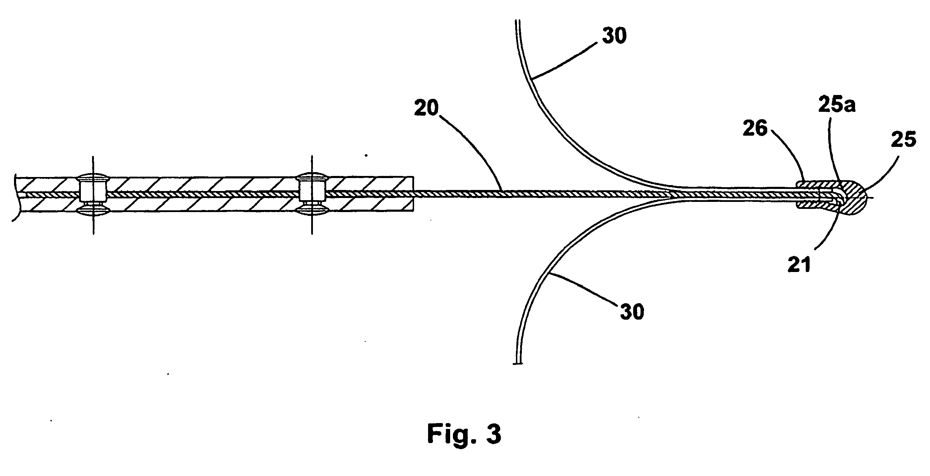

Die Ausbildung des Halterungselements 20 ergibt sich nun im Einzelnen aus den Figuren 2 und 3. Das Halterungselement 20 in Form eines Bleches, beispielsweise aus Edelstahl, ist zwischen zwei Wellen 30 angeordnet. Endseitig, d. h. im Bereich des Einfassrahmens 25 weist das Halterungselement 20 eine Abkantung 21 auf. Diese Abkantung 21 wird durch das Auge 25a des Einfassrahmens 25 aufgenommen. Das Halterungselement 20 befindet sich - wie bereits ausgeführt - zwischen dem Wellenmaterial der beiden benachbarten Wellen 30. Die Schenkel des U-förmig ausgebildeten Einfassrahmens 25 weisen eine Verzahnung 26 auf, mit denen das Balgmaterial klemmbar erfasst wird. Durch das Balgmaterial der Wellen 30 werden allerdings nicht nur die Schenkel des Einfassrahmens 25 erfasst, sondern darüber hinaus sind paarweise Bohrungen 28 vorgesehen, wobei der Abstand zweier Bohrungen eines Bohrungspaares 28 derart ist, dass dieser dem Abstand zweier Beine einer Heftklammer entspricht. Das heißt, dass durch das Bohrungspaar 28 das zu jeder Seite des Halterungselements 20 verlaufende Balgmaterial mit dem Halterungselement 20 durch Heftklammern verbunden wird. Somit entsteht eine insgesamt stabile Verbindung des Halterungselements mit dem Balg und hier insbesondere dem Balg im Bereich des Einfassrahmens, die auch dauerhaft gegen den Eintritt von Feuchtigkeit geschützt ist, da keine Verbindung nach außen hin besteht.

## Patentansprüche

1. Falten- oder Wellenbalg als teil eines Übergangs mit einem zwischen zwei Falten oder Wellen (30) angeordneten Halterungselement (20) zur Verbindung von parallel zum Balg (1) verlaufender Einrichtungselemente, z. B. der Bodenabdeckung (2), eines weiteren Balges, einer Balgseitenwand oder Ähnlichem, wobei zwei benachbarte Falten oder Wellen (30) im Übergang durch einen U-förmigen Einfassrahmen (25) miteinander verbunden sind, wobei das Halterungselement (20) durch den Einfassrahmen erfasst ist, wobei der Einfassrahmen im Bereich des Steges seiner U-form ein Auge (25a) bildet,
**dadurch gekennzeichnet,**
**dass** das Halterungselement (20) an dem dem Einfassrahmen (25) zugewandten Ende eine Erweiterung (21) aufweist, die in das Auge (25a) des Einfassrahmens (25) hineinragt.

2. Falten- oder Wellenbalg nach Anspruch 1,
**dadurch gekennzeichnet,**
**dass** das Halterungselement (20) im Bereich des Einfassrahmens (25) paarweise Bohrungen (28) aufweist.

3. Falten- oder Wellenbalg nach Anspruch 2,
**dadurch gekennzeichnet,**
**dass** ein Bohrungspaar (28) der Aufnahme der Beine einer Heftklammer dient, um das Halterungselement (20) mit dem Balgmaterial zu verbinden.

4. Falten- oder Wellenbalg nach Anspruch 1,
**dadurch gekennzeichnet,**
**dass** das Halterungselement (20) an seinem dem Einfassrahmen (25) zugewandten Ende abgekantet ist.

5. Falten- oder Wellenbalg nach Anspruch 1,
**dadurch gekennzeichnet,**
**dass** das Halterungselement (20) an seinem dem Einfassrahmen (25) zugewandten Ende eine Verdickung aufweist.

## Claims

1. A pleated or corrugated bellows as part of an intercar connection with a retainer element (20) interposed between two pleats or corrugations (30) for connecting mounting elements oriented to be parallel to said bellows (1) such as the floor covering (2), another bellows, a bellows side wall or the like, two neighbouring pleats or corrugations (30) being connected together in the connection by a U-shaped encasing frame (25), said retainer element (20) engaging with said encasing frame and said encasing frame forming an eye (25a) in the region of the bight segment of the U,
**characterized in**
**that** the retainer element (20) comprises, at its end turned toward the encasing frame (25), an extension (21) projecting into the eye (25a) of the encasing frame (25).

2. The pleated or corrugated bellows as set forth in claim 1,
**characterized in**
**that** the retainer element (20) comprises holes (28) arranged in pairs in the region of the encasing frame (25).

3. The pleated or corrugated bellows as set forth in claim 2,
**characterized in**
**that** one pair of holes (28) serves to receive the legs of a staple in order to connect the retainer element (20) to the bellows material.

4. The pleated or corrugated bellows as set forth in claim 1,
**characterized in**
**that** the retainer element (20) is chamfered at its end turned toward the encasing frame (25).

5. The pleated or corrugated bellows as set forth in claim 1,
**characterized in**
**that** the retainer element (20) comprises a swelling at its end turned toward the encasing frame (25).

## Revendications

1. Soufflet à plis ou à ondulations formant partie d'une intercirculation avec un élément de retenue (20) disposé entre deux plis ou ondulations (30) et destiné à relier des éléments de montage orientés parallèlement au soufflet (1), par exemple le recouvrement de plancher (2), un autre soufflet, une paroi latérale du soufflet ou similaire, deux plis ou ondulations (30) voisines étant reliées ensemble dans l'intercirculation par un cadre d'enchâssement (25) conformé en U, l'élément de retenue (20) étant enchâssé dans le cadre d'enchâssement et le cadre d'enchâssement formant un oeil (25a) au niveau de la base du U,
**caractérisé en ce**
**que** l'élément de retenue (20) comporte, à son extrémité tournée vers le cadre d'enchâssement (25), un prolongement (21) faisant saillie dans l'oeil (25a) du cadre d'enchâssement (25).

2. Soufflet à plis ou à ondulations selon la revendication 1,
**caractérisé en ce**
**que** l'élément de retenue (20) comporte des trous (28) disposés par paires dans la région du cadre d'enchâssement (25).

3. Soufflet à plis ou à ondulations selon la revendication 2,
**caractérisé en ce**
**qu'**une paire de trous (28) sert à recevoir les branches d'une agrafe afin de relier l'élément de retenue (20) au matériau du soufflet.

4. Soufflet à plis ou à ondulations selon la revendication 1,
**caractérisé en ce**
**que** l'élément de retenue (20) est chanfreiné à son extrémité tournée vers le cadre d'enchâssement (25).

5. Soufflet à plis ou à ondulations selon la revendication 1,
**caractérisé en ce**
**que** l'élément de retenue (20) comporte un renflement à son extrémité tournée vers le cadre d'enchâssement (25).
